**Europäisches Patentamt**

**European Patent Office**

**Office européen des brevets**

(19)

(11) Veröffentlichungsnummer: **0 283 729 B1**

(12) ## EUROPÄISCHE PATENTSCHRIFT

(45) Veröffentlichungstag der Patentschrift: **09.10.91**

(51) Int. Cl.⁵: **F16L 47/06**

(21) Anmeldenummer: **88102492.1**

(22) Anmeldetag: **20.02.88**

(54) **Rohrverbinder für Kunststoffrohre aus thermoplastischem Kunststoff, insbesondere Kabelführungsrohre und Druckrohre.**

(30) Priorität: **18.03.87 DE 3708768**

(43) Veröffentlichungstag der Anmeldung:
**28.09.88 Patentblatt 88/39**

(45) Bekanntmachung des Hinweises auf die
Patenterteilung:
**09.10.91 Patentblatt 91/41**

(84) Benannte Vertragsstaaten:
**AT BE CH DE ES FR GB IT LI NL SE**

(56) Entgegenhaltungen:
**DE-A- 2 731 749**
**DE-A- 2 800 406**
**DE-A- 3 411 462**
**GB-A- 1 574 298**

(73) Patentinhaber: **Dipl.-Ing. Dr. Ernst Vogelsang GmbH & Co. KG**
**Industriestrasse 2**
**W-4352 Herten/Westfalen(DE)**

(72) Erfinder: **Vogelsang, Horst**
**Zwickauer Strasse 12**
**W-4352 Herten/Westf.(DE)**

(74) Vertreter: **Andrejewski, Walter et al**
**Patentanwälte Andrejewski, Honke & Partner**
**Postfach 10 02 54 Theaterplatz 3**
**W-4300 Essen 1(DE)**

Rank Xerox (UK) Business Services

**Beschreibung**

Die Erfindung betrifft eine Rohrverbindung von Kabelführungsrohren aus Polyvinylchlorid mit extrusionsglatter Oberfläche, mit Einsteckende, Muffe und in einer Aufnahmerille der Muffe lose eingelegtem Dichtungsring ohne innere Verstärkung.

Bei der bekannten Ausführungsform, von der die Erfindung ausgeht (DE 28 00 406 C2), weist die Aufnahmerille einen trapezförmigen Querschnitt mit einsteckseitiger Flanke und Gegenflanke auf. Der Dichtungsring aus einem Elastomer ist einstückig aus einem in den trapezförmigen Querschnitt der Aufnahmerille mit Anlageflächen eingepaßten Halteringteilstück und einem demgegenüber trichterförmig eingezogenen Dichtungslippenteilstück geformt und das Halteringteilstück ist durch das Einsteckende beim Einstecken in die Dichtungskammer eindrückbar. Das Einsteckende weist außenseitig eine vordere Kegelfläche auf. Das Halteringteilstück ist innenseitig mit einer Kompressionsrippe versehen, die einen dreieckförmigen Rippenquerschnitt aufweist und in Einsteckrichtung hinter dem Flächenmittelpunkt des trapezförmigen Querschnitts der Aufnahmerille angeordnet ist. Der Winkel an der Kompressionsrippe, der mit der Kegelfläche am Einsteckende wechselwirkt, liegt außerhalb der Selbsthemmung. Der Dichtungsring ist in die Aufnahmerille lose eingelegt. Das bedeutet, daß der Dichtungsring bei nicht eingeführtem Einsteckende in der Aufnahmerille unter dem Einfluß seiner eigenen Elastizität lediglich durch Haftreibung gehalten und nicht eingeklebt ist. Tatsächlich verbietet sich bei der beschriebenen Rohrverbindung das Einkleben des Dichtungsringes, weil dieser im Zusammenhang mit Kontroll oder Reparaturarbeiten an einer Rohrleitung aus den entsprechenden Kunststoffrohren auf einfache Weise und zerstörungsfrei auswechselbar sein muß. Um das Halteringteilstück des Dichtungsringes in der Aufnahmerille dennoch sicher zu halten, kann bei einer Ausführung der bekannten Rohrverbindung ein Stützring eingebettet sein. Wird ohne Stützring gearbeitet, so hat man in der Praxis die Innenwände der Aufnahmerille häufig aufgerauht. Das Dichtungslippenteilstück des Dichtungsringes kann einteilig oder im Querschnitt schnabelförmig gespalten sein. Es kann zusätzlich umlaufende Dichtungsrippen tragen, die bei eingeführtem Einsteckende sich gegen die Muffenwand der Dichtungskammer bzw. das Einsteckende selbst anlegen. Das Einsteckende ist an einem Ende eines entsprechenden Kunststoffrohrschusses eingerichtet. Die Muffe wird durch Aufweiten und gegebenenfalls Stauchen eines solchen Kunststoffrohrschusses hergestellt.

Von besonderer Bedeutung sind bei der Rohrverbindung des beschriebenen Aufbaus die Kompressionsrippe und deren Anordnung in bezug auf den Flächenmittelpunkt des trapezförmigen Querschnittes der Aufnahmerille. Diese Maßnahmen verhindern, daß sich beim Einführen des Einsteckendes der Dichtungsring in bezug auf die Aufnahmerille unkontrolliert verschiebt. Die Kompressionsrippe erzeugt im eingeführten Zustand des Einsteckendes in dem Dichtungsring statische Spannungsverhältnisse, die den Dichtungsring in der Aufnahmerille festlegen. Allerdings muß das Einsteckende möglichst koaxial zur Achse der Muffe vorsichtig eingeführt werden. Bei einem unvorschriftsmäßigen Einführen des Einsteckendes in die Muffe und daraus resultierenden unbekannten dynamischen Beanspruchungen können Verschiebungen auftreten, die die Spannungsverhältnisse im statischen Zustand und damit die Dichtheit und die Langzeitdichtheit beeinträchtigen. Solche Veränderungen können insbesondere dann auftreten, wenn die verlegte Rohrleitung Erschütterungen oder Schwingungen aufzunehmen hat.

Der Erfindung liegt die Aufgabe zugrunde, einen gattungsgemäßen Rohrverbinder so weiter auszubilden, daß beim Einführen des Einsteckendes in die Muffe die auftretenden dynamischen Beanspruchungen selbst dann nicht zu Störungen führen, wenn das Einsteckende unvorschriftsmäßig und unvorsichtig in die Muffe eingeführt wird.

Die Lösung dieser Aufgabe ist durch die Kombination der Merkmale des Patentanspruches 1 gegeben. - Bei der erfindungsgemäßen Rohrverbindung besteht eine Selbsthemmung zwischen der Gegenflanke der Aufnahmerille sowie der zugeordneten Anlagefläche des Halteringteilstückes. Hinzukommt ein beachtliches Kompressionspotential des Dichtungsringes. Sowohl beim Einführen des Einsteckendes als auch im statischen Zustand entstehen Spannungsverhältnisse und Kräfte, die den Dichtungsring in der Aufnahmerille auch dann sicher festlegen, wenn ein unvorschriftsmäßiges und unvorsichtiges Einführen des Einsteckendes mit erheblichen dynamischen Beanspruchungen stattfindet. - Weitere Ausbildungen sind Gegenstand der Patentansprüche 2 und 3.

Im folgenden wird die Erfindung anhand einer lediglich ein Ausführungsbeispiel darstellenden Zeichnung ausführlicher erläutert. - Es zeigen

Fig. 1    eine schematische Darstellung zur Erläuterung des Begriffes der Selbsthemmung und des Winkels der Selbsthemmung,

Fig. 2    einen Axialschnitt durch eine erfindungsgemäße Rohrverbindung, in der oberen Hälfte bei nicht eingeführtem Einsteckteil, in der unteren Hälfte bei eingeführtem Einsteckteil,

Fig. 3    den vergrößerten Ausschnitt A aus dem Gegenstand nach Fig. 2,

Fig. 4    den nochmals vergrößerten Ausschnitt B aus dem Gegenstand nach Fig. 3, um 90° gedreht, und

Fig. 5    entsprechend der Fig. 4 den Ausschnitt C aus dem Gegenstand nach Fig. 3.

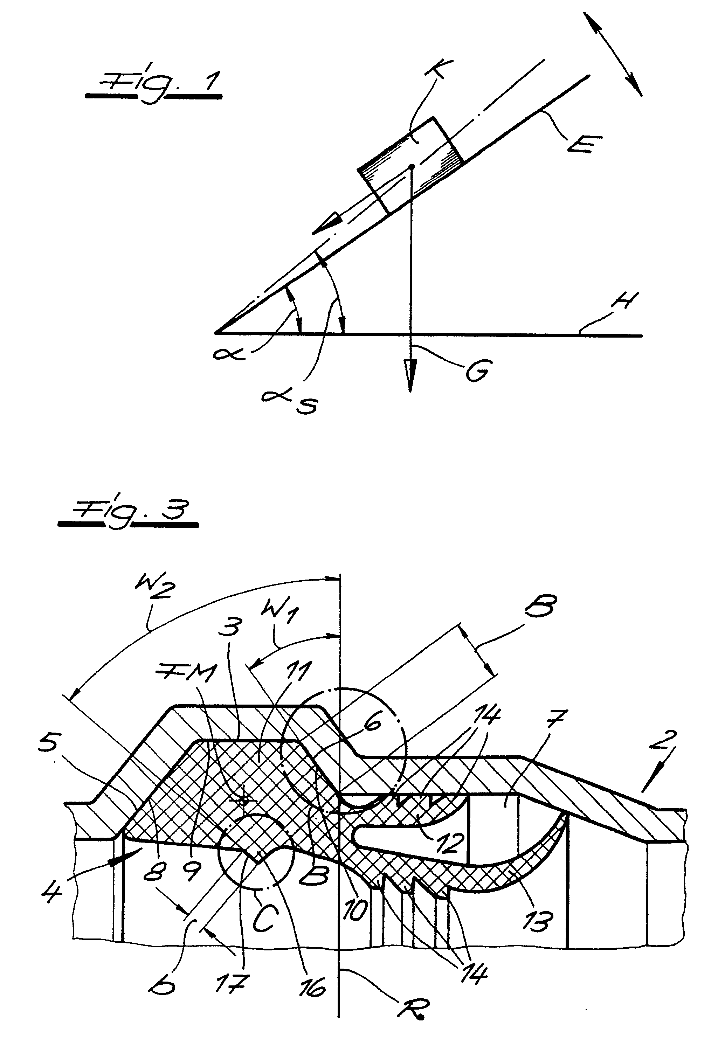

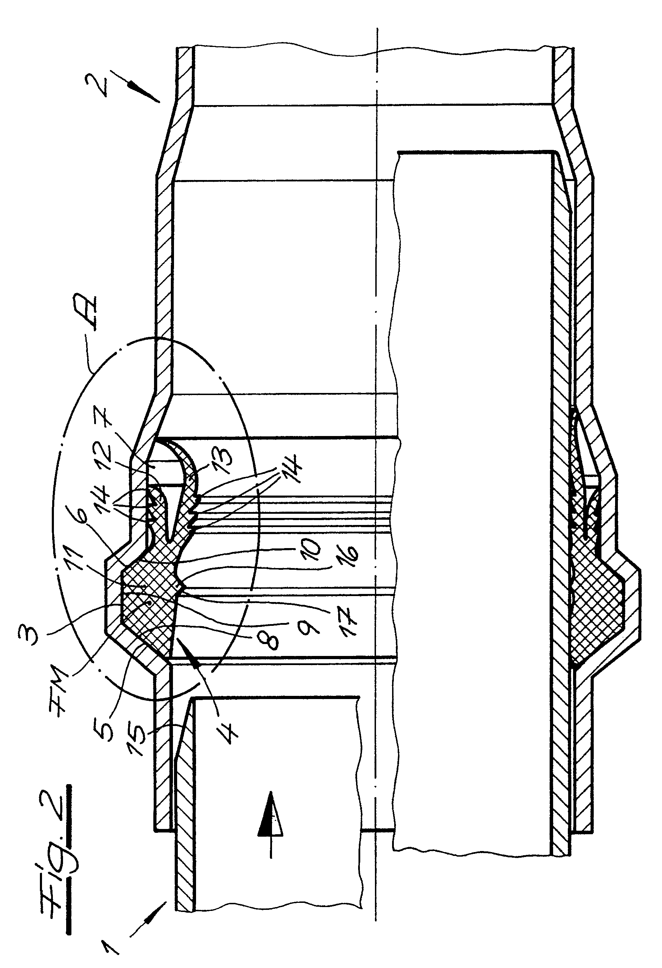

Die in der Fig. 2 dargestellte Rohrverbindung ist für Kunststoffrohre bestimmt, die aus thermoplastischem Kunststoff bestehen. Sie ist insbesondere für Kabelführungsrohre eingerichtet, die mit Hilfe der Rohrverbindung gekuppelt werden. In seinem grundsätzlichen Aufbau besteht die Rohrverbindung aus einem Einsteckende 1, einer Muffe 2 und einem in eine Aufnahmerille 3 der Muffe 2 lose eingelegten Dichtungsring 4 aus Elastomer. Das Einsteckende 1 ist am einen Ende eines entsprechenden Rohrschusses eingerichtet, die Muffe 2 am anderen Ende aufgeweitet.

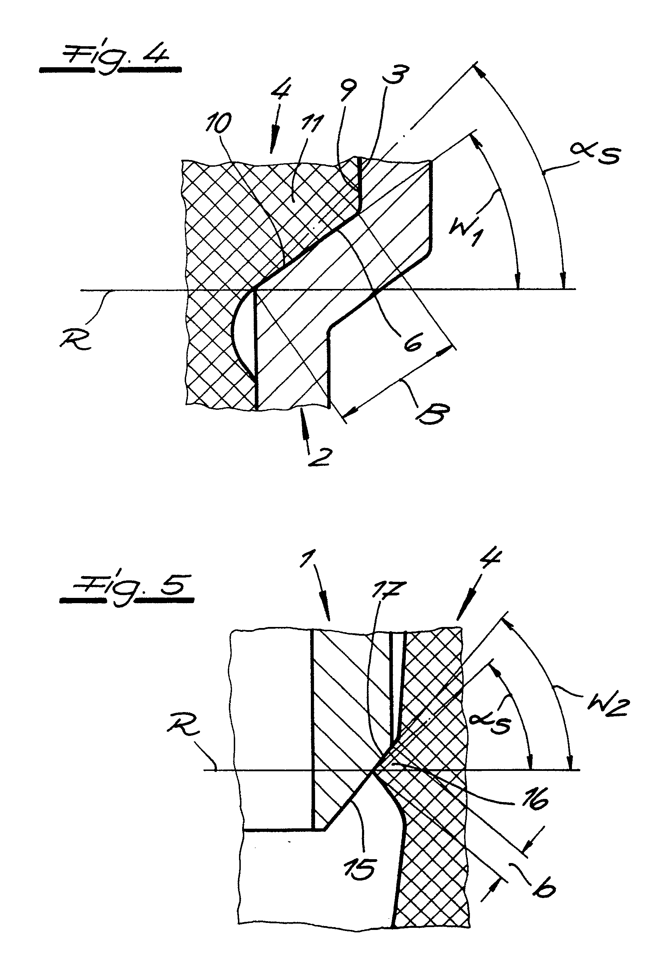

Insbesondere aus den Fig. 2 und 3 entnimmt man, daß die Aufnahmerille 3 einen trapezförmigen Querschnitt mit einsteckseitiger Flanke 5 und Gegenflanke 6 aufweist. Sie geht in eine angeschlossene Dichtungskammer 7 über. Der Dichtungsring 4 besteht einstückig aus einem in den trapezförmigen Querschnitt der Aufnahmerille 3 mit Anlageflächen 8, 9, 10 eingepaßten Halteringteilstück 11 und einem demgegenüber trichterförmig eingezogenen Dichtungslippelteilstück 12, 13. Im Ausführungsbeispiel trägt dieses Dichtungslippenteilstück 12, 13 noch zusätzliche Dichtungsrippen 14. Das Dichtungslippenteilstuck 12, 13 kann geschnabelt sein, wie es in der Zeichnung dargestellt ist. Es besteht insoweit gleichsam aus zwei Lippen 12, 13. Es kann aber auch lediglich eine Dichtungslippe aufweisen. Das Halteringteilstück 11 ist in die Aufnahmerille 3 eingelegt. Das Dichtungslippenteilstück 12, 13 ist durch das Einsteckende 1 beim Einstecken in die Dichtungskammer 7 eindrückbar. Das Einsteckende 1 weist außenseitig eine vordere Kegelfläche 15 auf. Das Halteringteilstück 11 ist innenseitig mit einer umlaufenden Kompressionsrippe 16 versehen, die man insbesondere in den Fig. 2 und 3 erkennt. Sie besitzt einen dreieckigen Rippenquerschnitt und ist in Einsteckrichtung hinter dem Flächenmittelpunkt FM des trapezförmigen Querschnittes der Aufnahmerille 3 angeordnet.

Für die Erfindung sind Verhältnisse wesentlich, die an den Begriff der Selbsthemmung angeschlossen sind. Dieser Begriff gehört zur Theorie der trockenen Reibung und ist in Fig. 1 erläutert worden. In der Fig. 1 erkennt man eine Horizontale H und gegenüber der Horizontalen H eine schiefe Ebene E, die mit der Horizontalen einen Winkel $\alpha$ bildet. Auf der schiefen Ebene E liegt ein Körper K mit dem Gewicht G, welches senkrecht nach unten wirkt. Die schiefe Ebene E kann in Richtung des eingezeichneten Bogenpfeils verschwenkt werden, wenn der Körper K in der eingezeichneten Position liegt. Verschwenkt man die schiefe Ebene in Fig. 1 nach oben, so daß der Winkel $\alpha$ größer wird, so gibt es einen Grenzwinkel, bei dem der Körper K auf der schiefen Ebene E abrutscht. Dieser Winkel heißt der Winkel der Selbsthemmung, er wird im folgenden mit $\alpha_S$ bezeichnet. Es versteht sich, daß er von den Reibungskoeffizienten zwischen der Oberfläche der schiefen Ebene E und der Unterseite des Körpers K und damit von den Oberflächenqualitäten, einschließlich der Oberflächenrauhigkeit, bestimmt ist. Ist der Winkel $\alpha$ kleiner als der Winkel $\alpha_S$ der Selbsthemmung, so liegt der Körper H auf der schiefen Ebene E fest. Ist der Winkel $\alpha$ größer als der Winkel $\alpha_S$ der Selbsthemmung, so überwindet der Körper H die Haftung, die aus der ruhenden Reibung resultiert, es kommt der Koeffizient der gleitenden Reibung ins Spiel und der Körper K rutscht auf der schiefen Ebene ab.

Bei dem Rohrverbinder ist die Anordnung so getroffen, daß die Gegenflanke 6 der Aufnahmerille 3 sowie die zugeordnete Anlagefläche 10 des Halteringteilstückes 11 in bezug auf einen Rohrverbinderradius R einen Winkel $W_1$ bilden, der kleiner ist als der Winkel $\alpha_S$ der Selbsthemmung, so daß Selbsthemmung herrscht. Die Anordnung ist fernerhin so getroffen, daß der auf einen Rohrverbinderradius R bezogene Winkel $W_2$ der einsteckseitigen Querschnittsfläche 17 der Kompressionsrippe 16, der beim Einschieben des Einsteckendes 1 mit dessen Kegelfläche 15 in Kontakt kommt, größer ist als der Winkel $\alpha_S$ der Selbsthemmung, so daß Selbsthemmung nicht eintritt. In bezug auf die Gegenflanke 6 und die zugeordnete Anlagefläche 10 sind diese Verhältnisse insbesondere in der Fig. 4 verdeutlicht worden. In bezug auf die einsteckseitige Querschnittsfläche 17 der Kompressionsrippe 16, die beim Einschieben des Einsteckendes 1 mit der Kegelfläche 15 in Kontakt kommt, sind die Verhältnisse in Fig. 5 verdeutlicht worden. Vergleicht man die Fig. 4 und 5 mit der Fig. 1, so erkennt man, daß die genannten Flächen in bezug auf die Kräfte, die beim Einschieben des Einsteckendes 1 an dem Dichtungsring 4, genauer an dem Halteringteilstück 11 des Dichtungsringes 4, angreifen und die in Einführungsrichtung des Einsteckendes 1 wirken, mit der Kraft G in Fig. 1 vergleichbar sind, so daß auch insoweit die Selbsthemmung ins Spiel kommt, und zwar sowohl an der Gegenflanke 6 der Aufnahmerille 3 und der zugeordneten Anlagefläche 10 des Halteringteilstückes 11 als auch an der einsteckseitigen Querschnittsfläche 17 der Kompressionsrippe 16, die beim Einschieben des Einsteckendes 1 mit dessen Kegelfläche 15 in Kontakt kommt. Es wird Selbsthemmung zwischen Gegenflanke 6 und zugeordneter Anlagefläche 10 des Halteringteilstückes 11 bewirkt, jedoch darauf geachtet, daß an der einsteckseitigen Querschnittsfläche 17 der Kompressionsrippe 16, die beim Einführen des Einsteckendes 1 mit der Kegelfläche 15 am Einsteckende 1 in Kontakt kommt, Selbsthemmung nicht eintritt. Auf diese Weise erreicht man in Zusammenwirkung mit dem Kompressionspotential, daß die dynamischen Beanspruchungen beim Einführen des Einsteckendes 1 störende Verlagerungen des lose in die Aufnahmerille 3 eingelegten Dichtungsringes 4 nicht bewirken, und daß auch später aufzunehmende vibrierende dynamische Beanspruchungen keine Störungen auslösen können.

Im einzelnen ist der dargestellte Rohrverbinder wie folgt weiter ausgebildet: So erkennt man insbesondere in der Fig. 3, daß der auf einen Rohrverbinderradius R bezogene Winkel $W_2$ der einsteckseitigen Querschnittsfläche 17 der Kompressionsrippe 16, der beim Einschieben des Einsteckendes 1 mit dessen Kegelfläche 15 in Kontakt kommt, größer ist als der Winkel $W_1$, den die Gegenflanke 6 der Aufnahmerille 3 sowie die zugeordnete Anlagefläche 10 des Halteringteilstückes 11 in bezug auf einen Rohrverbinderradius R bilden. Im übrigen ist die Anordnung im Ausführungsbeispiel so getroffen, daß die der Gegenflanke 6 zugeordnete Anlagefläche 10 des Halteringteilstückes 11 eine Breite aufweist, die dreimal bis fünfmal so breit ist, wie die Breite b der einstückseitigen Querschnittsfläche 17 der Kompressionsrippe 16.

Der Rohrverbinder aus Polyvinylchlorid weist eine extrusionsglatte Oberfläche auf, während der Dichtungsring 4 aus Elastomer mit einer Shorehärte von 50 - 60 ausgerüstet ist und mit einer vulkanisationsformglatten Oberfläche versehen ist. Der - Winkel $W_1$ der Gegenfläche 6 der Aufnahmerille 3 sowie entsprechend der Winkel der Anlagefläche 10 am Dichtungsring sind daher in bezug auf einen Rohrverbinderradius R gleich oder kleiner als 45°. Der auf einen Rohrverbinderradius R bezogene Winkel $W_2$ der einsteckseitigen Querschnittsfläche 17 der Kompressionsrippe 16 ist unter diesen Verhältnissen - größer als 30°.

## Patentansprüche

1. Rohrverbindung von Kabelführungsrohren aus Polyvinylchlorid mit extrusionsglatter Oberfläche mit Einsteckende (1), Muffe (2) und in eine Aufnahmerille (3) der Muffe (2) lose eingelegtem Dichtungsring (4) ohne innere Verstärkung,

   - wobei die Aufnahmerille (3) einen trapezförmigen Querschnitt mit einsteckseitiger Flanke (5) und Gegenflanke (6) aufweist sowie in eine angeschlossene Dichtungskammer (7) übergeht,
   - wobei der Dichtungsring (4) aus einem Elastomer der Shorehärte von 50 - 60 mit vulkanisationsformglatter Oberfläche besteht und einstückig aus einem in den trapezförmigen Querschnitt mit Anlageflächen (8, 9, 10) eingepaßten Halteringteilstück (11) und einem demgegenüber trichterförmig eingezogenen Dichtungslippenteilstück (12, 13) durch das Einsteckende (1) beim Einstecken in die Dichtungskammer (7) eindrückbar ist,
   - wobei das Einsteckende (1) außenseitig eine vordere Kegelfläche (15) aufweist,
   - wobei fernerhin das Halteringteilstück (11) innenseitig mit einer umlaufenden Kompressionsrippe (16) versehen ist, die einen dreieckförmigen Rippenquerschnitt aufweist sowie in Einsteckrichtung hinter dem Flächenmittelpunkt (FM) des trapezförmigen Querschnittes der Aufnahmerille (3) angeordnet ist,
   - wobei die Gegenflanke (6) der Aufnahmerille (3) sowie die zugeordnete Anlagefläche (10) des Halteringteilstückes (11) in bezug auf einen Rohrverbinderradius (R) einen Winkel ($W_1$) bilden, der gleich oder kleiner ist als 45° sowie Selbsthemmung bewirkt,
   - wobei der auf einen Rohrverbinderradius (R) bezogene Winkel ($W_2$) der einsteckseitigen Querschnittsfläche (17) der Kompressionsrippe (16), je beim Einschieben des Einsteckendes (1) mit dessen Kegelfläche (15), die einen dem Winkel ($W_2$) entsprechenden Winkel aufweist, in Kontakt kommt, großer ist als der Winkel ($\propto_S$) der Selbsthemmung, so daß Selbsthemmung nicht eintritt und
   - wobei die der Gegenflanke (6) zugeordnete Anlagefläche (10) des Halteringteilstückes (11) eine Breite (B) aufweist, die dreimal bis fünfmal so breit ist, wie die Breite (b) der einsteckseitigen Querschnittsfläche (17) der Kompressionsrippe (16).

2. Rohrverbinder nach Anspruch 1, wobei der auf einen Rohrverbinderradius (R) bezogene Winkel ($W_2$) der einsteckseitigen Querschnittsfläche (17) der Kompressionsrippe (16), der beim Einschieben des Einsteckendes (1) mit dessen Kegelfläche (15) in Kontakt kommt, größer ist als der Winkel ($W_1$), den die Gegenflanke (6) der Aufnahmerille (3) sowie die zugeordnete Anlagefläche (10) des Halteringteilstückes (11) in bezug auf einen Rohrverbinderradius (R) bilden.

3. Rohrverbinder nach Anspruch 1, wobei der auf einen Rohrradius (R) bezogene Winkel ($W_2$) der einsteckseitigen Querschnittsfläche (17) der Kompressionsrippe (16) der beim Einschieben des Einsteckendes (1) mit dessen Kegelfläche (15) in Kontakt kommt, größer ist als 30°.

## Claims

1. A pipe connector of cable-carrying pipes made from polyvinyl chloride with an extrusion-smooth surface, having an insertion end (1), a socket (2) and a sealing ring (4) without inner strengthening loosely inserted in a reception groove (3) of the socket (2),

   - in which the reception groove (3) has a trapezium-shaped cross-section with a flank (5) on the insertion side and a counter-flank (6), and merges into an attached sealing chamber (7),
   - in which the sealing ring (4) consists of an elastomer with Shore hardness of 50 - 60 with the smooth surface of a vulcanization mould, and as one piece consisting of a holding ring portion (11) fitting into the trapezium-shaped cross section with contact surfaces (8, 9, 10) and a sealing lips portion (12, 13) tapering in funnel shape relatively thereto can be pressed in by the insertion end (1) as it is inserted into the sealing chamber (7),
   - in which the insertion end (1) has a front conical surface (15) externally,
   - in which moreover the holding ring portion (11) is provided internally with a circumferential compression rib (18) that has a triangular-shaped rib cross-section and in the direction of insertion is located beyond the centre of area (FM) of the trapezium-shaped cross-section of reception groove (3),
   - in which the counter-flank (6) of the reception groove (3) and the associated contact surface (10) of the holding ring portion (11) form an angle (W₁) relatively to a pipe-connector radius (R) that is equal to or less than 45° and also causes automatic locking,
   - in which the angle (W₂), relatively to a pipe-connector radius (R), of the insertion-sided cross-section surface (17) of compression rib (16) that on pushing in the insertion end (1) comes into contact with the conical surface (15) of the latter which has an angle corresponding to the angle (W₂), is greater than the angle ($\alpha_S$) of automatic locking, so that automatic locking does not occur, and
   - in which the contact surface (10) associated with counter-flank (6) of holding ring portion (11) has a width (B) that is three to five times as great as that of the width (b) of the insertion-sided cross-section surface (17) of compression rib (16).

2. A pipe connector according to Claim 1, in which the angle (W₂), relatively to a pipe-connector radius (R), of the insertion-sided cross-section surface (17) of compression rib (16) that on pushing in the insertion end (1) comes into contact with the conical surface (15) of the latter, is larger than the angle (W₁) which the counter-flank (6) of the reception groove (3) and the associated contact surface (10) of the holding ring portion (11) form relatively to a pipe-connector radius (R).

3. A pipe connector according to Claim 1, in which the angle (W₂), relatively to a pipe-connector radius (R) of the-insertion-sided cross-section surface (17) of compression rib (16) that on pushing in the insertion end (1) comes into contact with the conical surface (15) of the latter is greater than 30°.

## Revendications

1. Raccord pour tubes de passage de câbles réalisés en polychlorure de vinyle, possédant une surface extrudée lisse et comportant une extrémité d'enfichage (1), un manchon (2) et une bague d'étanchéité (4) insérée de façon lâche dans une rainure de logement (3) du manchon (2) sans renforcement intérieur, et dans lequel

   - la rainure de logement (3) possède une section transversale trapézoïdale présentant un flanc (5) situé sur le côté enfichage et un flanc opposé (6) et se prolonge par une chambre d'étanchéité (7), qui lui est raccordée,
   - la bague d'étanchéité (4) est réalisée en un élastomère possédant la dureté Shore 50-60 et comportant une surface lisse formée par vulcanisation, et peut être enfoncée d'un seul tenant sous la forme d'un élément annulaire de retenue (11) inséré à force dans la section transversale trapézoïdale possédant les surfaces d'application (8, 9, 10) et d'un élément formant lèvre d'étanchéité (12,13) rétréci en forme d'entonnoir par rapport à l'élément annulaire de retenue, dans l'extrémité d'enfichage (1) lors de l'enfichage dans la chambre d'étanchéité (16),
   - l'extrémité d'enfichage (1) possédant, sur son côté extérieur, une surface conique avant (15),

- et en outre l'élément annulaire de retenue (11) comporte, sur sa face intérieure, une nervure périphérique de compression (16), qui possède une section transversale triangulaire et est disposée, dans la direction d'enfichage, en arrière du centre (FM) de la surface de la section transversale trapézoïdale de la rainure de logement (3),

- le flanc opposé (6) de la rainure de logement (3) ainsi que la surface associée d'application (10) de l'élément annulaire de retenue (11) font, par rapport à un rayon (R) du raccord, un angle (W₁), qui est égal ou inférieur à 45° et réalise un effet d'auto-blocage,

- l'angle (W₂), rapporté à un rayon (R) du raccord, de la surface en coupe transversale (17), située sur le côté enfichage, de la nervure de compression (16) vient en contact, lors de l'insertion de l'extrémité d'enfichage (1), avec la surface conique (15) de cette extrémité, qui possède un angle correspondant à l'angle (W₂), est supérieur à l'angle (αS) du système d'autobloge de sorte qu'il n'apparaît aucun blocage automatique, et

- la surface d'application (10), associée au flanc opposé (6), de l'élément annulaire de retenue (11) possède une largeur (B) comprise entre le triple et le quintuple de la largeur (b) de la surface en coupe transversale (17), située sur le côté d'enfichage, de la nervure de compression (16).

2. Raccord selon la revendication 1, dans lequel l'angle (W₂), rapporté au rayon (R) du raccord, de la surface en coupe transversale (17), située sur le côté enfichage, de la nervure de compression (16), qui lors de l'enfichage de l'extrémité d'enfichage (1) vient en contact avec la surface conique (15) de cette extrémité, est supérieur à l'angle (W₁) que font le flanc opposé (6) et la rainure de Logement (3) et la surface associée d'application (10) de l'élément annulaire de retenue (11) par rapport à un rayon (R) du raccord.

3. Raccord selon la revendication 1, dans lequel l'angle (W₂), rapporté à un rayon (R) du raccord, de la surface en coupe transversale (17), située sur le côté enfichable, de la nervure de compression (16), qui, lors de l'insertion de l'extrémité d'enfichage (1), vient en contact avec la surface conique (15) de cette extrémité, est supérieur à 30°.

Fig. 1

Fig. 3

7

Fig. 2

Fig. 4

Fig. 5